(19)

Europäisches Patentamt

European Patent Office

Office européen des brevets

(11) **EP 4 603 530 A1**

(12) **EUROPEAN PATENT APPLICATION**

(43) Date of publication:
**20.08.2025 Bulletin 2025/34**

(21) Application number: **24157998.6**

(22) Date of filing: **16.02.2024**

(51) International Patent Classification (IPC):
**C08J 5/18** (2006.01)      **C08F 110/06** (2006.01)
**C08L 23/12** (2006.01)

(52) Cooperative Patent Classification (CPC):
(C-Sets available)
**C08J 5/18; B32B 27/32; C08F 110/06; C08L 23/12;**
C08J 2323/12                      (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH
1020 Vienna (AT)**

(72) Inventors:
• **CARMELI, Enrico
4021 Linz (AT)**

• **WANG, Jingbo
4021 Linz (AT)**
• **GAHLEITNER, Markus
4021 Linz (AT)**
• **ZACH, Markus
4021 Linz (AT)**

(74) Representative: **Borealis GmbH
Borealis Polyolefine GmbH
IPR-Department
St.-Peter-Straße 25
4021 Linz (AT)**

(54) **A FILM WITH IMPROVED THERMOFORMABILITY AND BARRIER PROPERTIES**

(57)     The present invention relates to a film, preferably a cast film, comprising a propylene homopolymer having:
- a melt flow rate $MFR_2$, as determined in accordance with ISO1133 at 230 °C under 2.16 kg, of from 0.1 to 20 g/10 min,
- an ethylene content (C2), as determined by quantitative $^{13}C$-NMR spectroscopic analysis, of from 0 to 0.5 wt.-%;
- a melting temperature Tm, as determined in accordance with ISO 11357/part 3/method C2, of from 135 to 180 °C; and
- a xylene cold soluble (XCS) fraction, as determined in accordance with ISO 16152 at 25 °C, of from 0.1 to 10.0 wt.-%,
wherein the film has a kβ value, as determined on 300 μm cast film by wide angle X-ray Scattering measurement (WAXS) as provided in the description, of from 0.01 to 0.9.

Fig. 1

EP 4 603 530 A1

(52) Cooperative Patent Classification (CPC): (Cont.)

C-Sets
**C08F 110/06, C08F 2/001;**
**C08F 110/06, C08F 4/6465;**
**C08F 110/06, C08F 4/6492;**
**C08F 110/06, C08F 4/6546;**
**C08L 23/12, C08L 23/12;**
C08F 110/06, C08F 2500/04, C08F 2500/12,
C08F 2500/26, C08F 2500/33, C08F 2500/34,
C08F 2500/35

## Description

### Field of Invention

The present invention relates to a film, preferably a cast film, comprising a propylene homopolymer and exhibiting improved thermoformability and barrier properties. The present invention further relates to a process for obtaining such a film.

### Background of Invention

Pharmaceutical packaging systems such as tablet blisters usually comprise a push-through film that is the lid and a thermoformed film that is the blister. These films are made of different materials, for instance, the blister side is made of polyvinyl chloride (PVC), polyvinylidene chloride (PvDC) or fluoropolymers and push-through closure is made of aluminum with sealing layer(s). However, recently PVC is not considered as the best candidate for pharmaceutical blister applications due to its incompatibility to be mechanically recycled and its halogen content. Current studies focus on replacing it to shift towards more sustainable solutions. The polymer replacing PVC must be suitable for thermoforming process and having an excellent balance of properties. Polypropylenes, in particular isotactic propylene homopolymers, are seen as suitable candidates for such a replacement due to their medium barrier properties, stiffness and recyclability. However, while PVC can be thermoformed in a wide temperature range above the glass transition temperature, for isotactic propylene homopolymers thermoforming can occur only close to the melting point, at which the crystals present in the polymer can be partially molten. This is particularly true for $\alpha$-phase crystals of propylene homopolymers, which melt at high temperature. It is already known that the presence of $\beta$-crystals in films made of isotactic propylene homopolymers lead to an improved thermoforming process measured by, for instance, higher cycle rates, broader processing temperature window or reduced cycle times. Furthermore, any improvement in the water barrier properties, potentially below the typical value of 0.5 g/m$^2$day for propylene homopolymer is highly desired for blister application. However, an improvement of thermoforming ability and water barrier performance at the same time is challenging.

DE 4420991 A1, for instance, relates to use of polypropylenes in thermoforming process. It focuses on improving the thermoforming performance by increasing the amount of $\beta$-crystals using $\beta$-nucleating agents. However, the $\beta$-nucleating agent disclosed herein is not included in the positive list of additives in the European Pharmacopoeia for polypropylene and thus not suitable to be used in pharmaceutical tablet blisters. In fact, none of the additives listed in the European Pharmacopoeia can be used as $\beta$-nucleating agents.

As a consequence, there is a need for suitable material to be used in pharmaceutical blister packaging, that is sustainable and compliant with European regulations.

The present invention provides a film comprising polypropylene homopolymers, that is obtained with specific process conditions enabling the presence of $\beta$-crystals without using any nucleating agents, that exhibits an excellent combination of mechanical performance, thermoforming ability and low penetration capacity.

### Summary of Invention

The present invention relates to a film, preferably a cast film, comprising a propylene homopolymer having:

- a melt flow rate MFR$_2$, as determined in accordance with ISO1133 at 230 °C under 2.16 kg, of from 0.1 to 20 g/10 min,
- an ethylene content (C2), as determined by quantitative $^{13}$C-NMR spectroscopic analysis, of from 0 to 0.5 wt.-%;
- a melting temperature Tm, as determined in accordance with ISO 11357/part 3/method C2, of from 135 to 180 °C; and
- a xylene cold soluble (XCS) fraction, as determined in accordance with ISO 16152 at 25 °C, of from 0.1 to 10.0 wt.-%,

wherein the film has a k$\beta$ value, as determined on 300 $\mu$m cast film by wide angle X-ray Scattering measurement (WAXS) as provided in the description, of from 0.01 to 0.9.

The present invention further relates to a process for obtaining the film as described herein, comprising the steps of:

a) passing the propylene homopolymer through a flat die whereby the film is extruded;

b) cooling the film through a roll, wherein the cooling temperature preferably ranges from 65 to 140 °C, more preferably from 70 to 125 °C and most preferably from 80 to 120 °C.

**Detailed Description**

The present invention relates to a film, preferably a cast film, comprising a propylene homopolymer. "Propylene homopolymer" as used herein refers to a polymer that essentially consists of propylene monomer units. A propylene homopolymer may comprise comonomer units up to 0.5 mol-%, preferably up to 0.1 mol-%, more preferably up to 0.05 mol-% and most preferably up to 0.01 mol-% due to impurities.

*Propylene homopolymer*

The film, preferably a cast film, of the present invention comprises a propylene homopolymer having:

- a melt flow rate $MFR_2$, as determined in accordance with ISO1133 at 230 °C under 2.16 kg of from 0.1 to 20 g/10 min,
- an ethylene content (C2), as determined by quantitative $^{13}$C-NMR spectroscopic analysis, of from 0 to 0.5 wt.-%;
- a melting temperature Tm, as determined in accordance with ISO 11357/part 3/method C2, of from 135 to 180 °C; and
- a xylene cold soluble (XCS) fraction, as determined in accordance with ISO 16152 at 25 °C, of from 0.1 to 10.0 wt.-%,

wherein the film has a kβ value, as determined on 300 μm cast film by wide angle X-ray Scattering measurement (WAXS) as provided hereinbelow, of from 0.01 to 0.9.

The melt flow rate $MFR_2$ of the propylene homopolymer, as determined in accordance with ISO1133 at 230 °C under 2.16 kg, preferably ranges from 0.5 to 10 g/10 min, more preferably from 1 to 5 g/10 min.

It is preferred when the propylene homopolymer according to the present invention has:

a) a xylene cold soluble (XCS) fraction, as determined in accordance with ISO 16152 at 25 °C, of from 1.0 to 8.0 wt.-%, more preferably from 1.5 to 5.0 wt.-%; and/or

b) an ethylene content (C2), as determined by quantitative $^{13}$C-NMR spectroscopic analysis, of from 0 to 0.1 wt.-%.

It is the most preferred when the propylene homopolymer has:

a) a xylene cold soluble (XCS) fraction, as determined in accordance with ISO 16152 at 25 °C, of from 1.5 to 5.0 wt.-%; and

b) an ethylene content (C2), as determined by quantitative $^{13}$C-NMR spectroscopic analysis, of from 0 to 0.1 wt.-%.

The melting temperature Tm of the propylene homopolymer, as determined in accordance with ISO 11357/part 3/method C2, preferably ranges from 145 to 175 °C, more preferably from 150 to 170 °C.

It is preferred when the propylene homopolymer of the present invention has a molecular weight distribution MWD, as determined in accordance with ISO 16014-4:2003 and ASTM D 6474-99, of from 1 to 20, more preferably from 2 to 15, and most preferably from 1.5 to 10.

It is further preferred when the propylene homopolymer of the present invention has a crystallization temperature Tc, as determined in accordance with ISO 11357/part 3/method C2, of from 95 to 140 °C, more preferably from 100 to 130 °C, and most preferably from 110 to 120 °C.

The propylene homopolymer according to the present invention may comprise additives, preferably in an amount of from 0.01 to 10.0 wt.-%, more preferably from 0.05 to 5.0 wt.-%, and most preferably from 0.1 to 1.0 wt.-%, based on the total weight of the propylene homopolymer. Such additives may be selected from the group consisting of antioxidants, acid scavengers, pigments, lubricants, anti-blocking agents, UV-stabilizers and mixtures thereof.

It is preferred when the propylene homopolymer of the present invention does not comprise any nucleating agents, such as α-nucleating agents or β-nucleating agents. It is particularly preferred when the propylene homopolymer does not comprise any β-nucleating agents. It is the most preferred that the propylene homopolymer is essentially free of β-nucleating agents, preferably essentially free of tris-2,3-dimethyl-hexylamide of trimesic acid, quinacridone quinone, N,N'-dicyclohexylterephthalamide, zinc adipate, calcium pimelate or N,N-dicyclohexyl-2,6-naphthalene dicarboxamide.

*Process for producing propylene homopolymer*

The propylene homopolymer may be produced in a multi-stage polymerization process comprising the steps of:

a) polymerizing propylene in the presence of a Ziegler-Natta catalyst, in a first polymerization reactor (R1) and obtaining a first polymerization product;

b) transferring the first polymerization product to a second polymerization reactor (R2) and obtaining a final polymerization product; and

c) optionally, compounding the final polymerization product obtained in step b) with additives.

The polymerization process of the polypropylene composition is conducted in a multi-stage polymerization as described hereinabove, preferably in a sequential polymerization process. The term "sequential polymerization" indicates that the propylene homopolymer is produced in at least two reactors connected in series. Accordingly, the present polymerization system comprises at least a first polymerization reactor (R1) described in step a) and a second polymerization reactor (R2) as described in step b). The term "polymerization reactor" shall indicate that the main polymerization takes place. Thus, in case the process consists of two polymerization reactors, this definition does not exclude the option that the overall system comprises for instance a pre-polymerization step in a pre-polymerization reactor. The term "consist of" is only a closing formulation in view of the main polymerization reactors.

Preferably, at least one of the two polymerization reactors (R1) and (R2) is a slurry reactor. It is the most preferred that both polymerization reactors (R1) and (R2) are slurry reactors, which can be any continuous or simple stirred batch tank reactor or loop reactor operating in bulk or slurry. Bulk means a polymerization in a reaction medium that comprises at least 60 % (w/w) monomer. According to the present invention the slurry reactor is preferably a (bulk) loop reactor.

Preferably, the propylene homopolymer of the first polymerization reactor (R1), i.e. fraction produced in the first polymerization reactor (R1), more preferably in the polymer slurry of the first loop reactor, is directly fed into the second polymerization reactor (R2), i.e. into the second loop reactor, without a flash step between the stages. By "direct feed" is meant a process wherein the content of the first polymerization reactor (R1), i.e. of the first loop reactor, the polymer slurry comprising the first propylene homopolymer fraction (H-PP1), is led directly to the next stage second loop reactor.

Alternatively, the propylene homopolymer of the first polymerization reactor (R1), i.e. fraction produced in the first polymerization reactor (R1), may be also directed into a flash step or through a further concentration step before being fed into the second polymerization reactor (R2), i.e. into the second loop reactor. Accordingly, this "indirect feed" refers to a process wherein the content of the first polymerization reactor (R1), of the first loop reactor, i.e. the polymer slurry, is fed into the second polymerization reactor (R2), into the second loop reactor, via a reaction medium separation unit and the reaction medium as a gas from the separation unit.

The Ziegler-Natta catalyst is fed into the first polymerization reactor (R1) and is transferred with the polymer (slurry) obtained in the first polymerization reactor (R1) into the subsequent reactors. If the process covers also a pre-polymerization step it is preferred that all of the Ziegler-Natta catalyst is fed in the pre-polymerization reactor. Subsequently the pre-polymerization product containing the Ziegler-Natta catalyst is transferred into the first polymerization reactor (R1).

Especially good results are achieved in case the temperature in the reactors is carefully chosen.

Accordingly it is preferred that the operating temperature in the first polymerization reactor (R1) is in the range of 62 to 90 °C, more preferably in the range of 70 to 88 °C, still more preferably in the range of 75 to 85 °C.

Alternatively or additionally to the previous paragraph it is preferred that the operating temperature in the second polymerization reactor (R2) is in the range of 62 to 90 °C, more preferably in the range of 70 to 88 °C, still more preferably in the range of 75 to 85 °C.

Preferably hydrogen is added in each polymerization reactor in order to control the molecular weight, i.e. the melt flow rate $MFR_2$.

Preferably the average residence time is rather long in the polymerization reactors (R1) and (R2). In general, the average residence time ($\tau$) is defined as the ratio of the reaction volume ($V_R$) to the volumetric outflow rate from the reactor ($Q_o$) (i.e. $V_R/Q_o$), i.e $\tau = V_R/Q_o$ [tau = $V_R/Q_o$]. In case of a loop reactor the reaction volume ($V_R$) equals to the reactor volume.

Accordingly the average residence time ($\tau$) in the first polymerization reactor (R1) is preferably at least 15 min, more preferably in the range of 15 to 80 min, still more preferably in the range of 20 to 60 min, like in the range of 24 to 50 min, and/or the average residence time ($\tau$) in the second polymerization reactor (R2) is preferably at least 70 min, more preferably in the range of 70 to 220 min, still more preferably in the range of 80 to 210 min, yet more preferably in the range of 90 to 200 min, like in the range of 90 to 190 min.

It is preferred that a pre-polymerization step is conducted prior to step a). In the pre-polymerization reactor a polypropylene is produced. The pre-polymerization is conducted in the presence of the Ziegler-Natta catalyst. According to this embodiment the Ziegler-Natta catalyst, the co-catalyst (Co), and the external donor (ED) are all introduced to the pre-polymerization step. However, this shall not exclude the option that at a later stage for instance further co-catalyst (Co) and/or external donor (ED) is added in the polymerization process, for instance in the first reactor (R1). In one embodiment the Ziegler-Natta catalyst, the co-catalyst (Co), and the external donor (ED) are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical, but must be sufficiently high to maintain the reaction mixture in the liquid phase. Thus, the pressure may be from 2000 to 8000 kPa, for example from 2200 to 7000 kPa.

In a preferred embodiment, the pre-polymerization is conducted as bulk slurry polymerization in liquid propylene, i.e. the liquid phase mainly comprises propylene, with optionally inert components dissolved therein.

It is possible to add other components also to the pre-polymerization stage. Thus, hydrogen may be added into the pre-polymerization stage to control the molecular weight of the polypropylene as is known in the art. Further, antistatic additive may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture of the Ziegler-Natta catalyst and the polypropylene produced in the pre-polymerization reactor is obtained. Preferably the Ziegler-Natta catalyst is (finely) dispersed in the polypropylene. In other words, the Ziegler-Natta catalyst particles introduced in the pre-polymerization reactor split into smaller fragments which are evenly distributed within the growing polypropylene. The sizes of the introduced Ziegler-Natta catalyst particles as well as of the obtained fragments are not of essential relevance for the instant invention and within the skilled knowledge.

As mentioned above, if a pre-polymerization is used, subsequent to said pre-polymerization, the mixture of the Ziegler-Natta catalyst and the polypropylene produced in the pre-polymerization reactor is transferred to the first reactor (R1). Typically the total amount of the polypropylene in the final propylene copolymer is rather low and typically not more than 5.0 wt.-%, more preferably not more than 4.0 wt.-%, still more preferably in the range of 0.5 to 4.0 wt.-%, like in the range 1.0 of to 3.0 wt.-%.

***Catalyst for propylene homopolymer***

The propylene homopolymer of the present invention may be produced using a solid Ziegler-Natta catalyst comprising:

a) compounds of a transition metal of Group 4 to 6 of IUPAC;

b) a Group 2 of IUPAC metal compound;

c) an internal donor, that is a non-phthalic compound, preferably a non-phthalic ester;

d) a co-catalyst; and

e) optionally, an external donor.

Detailed description of preparation of catalysts is disclosed in WO 2012/007430, EP2610271, EP 2610270 and EP2610272.

The catalyst comprises compounds (TC) of a transition metal of Group 4 to 6 of IUPAC, like titanium, a Group 2 metal compound (MC), like a magnesium, and an internal donor (ID) being a non-phthalic compound, preferably a non-phthalic acid ester, still more preferably being a diester of non-phthalic dicarboxylic acids as described in more detail below. Thus, the catalyst is in a preferred embodiment fully free of undesired phthalic compounds. Further, the solid catalyst is free of any external support material, like silica or $MgCl_2$, but the catalyst is self-supported.

The transition metal compound of Group 4 to 6 is preferably a titanium compound, most preferably a titanium halide, like $TiCl_4$.

The internal donor (ID) used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

The Ziegler-Natta catalyst is preferably used in association with an alkyl aluminum cocatalyst and optionally external donors.

As further component in the instant polymerization process an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a_p R^b_q Si(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are $(tert-butyl)_2Si(OCH_3)_2$, $(cyclohexyl)(methyl)Si(OCH_3)_2$, $(phenyl)_2Si(OCH_3)_2$ and $(cyclopentyl)_2Si(OCH_3)_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 3 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^3$ and $R^4$ are the same, yet more preferably both $R^3$ and $R^4$ are an ethyl group.

Especially preferred external donors (ED) are the pentyl dimethoxy silane donor (D-donor) or the cyclohexylmethyl dimethoxy silane donor (C-Donor).

In addition to the Ziegler-Natta catalyst and the optional external donor (ED) a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Advantageously, the triethyl aluminium (TEAL) has a hydride content, expressed as $AlH_3$, of less than 1.0 wt.-% with respect to the triethyl aluminium (TEAL). More preferably, the hydride content is less than 0.5 wt.-%, and most preferably the hydride content is less than 0.1 wt.-%.

Preferably the ratio between the co-catalyst (Co) and the external donor (ED) [Co/ED] and/or the ratio between the co-catalyst (Co) and the transition metal (TM) [Co/TM] should be carefully chosen.

Accordingly, the mole ratio of co-catalyst (Co) to external donor (ED) [Co/ED] must be in the range of 5 to 45, preferably is in the range of 5 to 35, more preferably is in the range of 5 to 25; and optionally the mole ratio of co-catalyst (Co) to titanium compound (TC) [Co/TC] must be in the range of above 80 to 500, preferably is in the range of 100 to 350, still more preferably is in the range of 120 to 300.

### *Film*

The film according to the present invention is preferably a cast film, comprising the propylene homopolymer as described hereinabove. It is preferred when the propylene homopolymer is present in an amount of from 70 to 100 wt.-%, more preferably from 90 to 100 wt.-% and most preferably from 95 to 100 wt.-%, based on the total weight of the film.

The preferred film thickness ranges from 100 to 1000 $\mu$m, more preferably from 150 to 800 $\mu$m, and most preferably from 200 to 600 $\mu$m.

The film according to the present invention has a $k\beta$ value, as determined on 300 $\mu$m cast film by wide angle X-ray Scattering measurement (WAXS) as provided hereinbelow, of from 0.01 to 0.9, preferably from 0.1 to 0.8, more preferably from 0.2 to 0.6, and most preferably from 0.3 to 0.5.

It is preferred when the film according to the present invention has a crystallinity, as determined on 300 $\mu$m cast film by wide angle X-ray Scattering measurement (WAXS) as provided hereinbelow, of from 40 to 100%, more preferably from 45 to 90%, and most preferably from 50 to 80%.

It is further preferred when the film of the present invention has a storage modulus E', as determined on 300 $\mu$m cast film by DMTA method described herein, of from 1500 to 2500 MPa, more preferably from 1600 to 2300 MPa, and most preferably from 1700 to 2100 MPa. The film of the present invention preferably has a thermoforming window $\Delta$T, as determined on 300 $\mu$m cast film by DMTA method described herein, of from 1 to 25 °C, more preferably from 3 to 20 °C, and most preferably from 5 to 15 °C. The thermoforming window $\Delta$T, as also described herein under the "Measurement Methods", is defined as difference between a first temperature T' where storage modulus is equal to 100 MPa and a second temperature T" where the storage modulus is equal to 50 MPa, since it is known that above 100 MPa the material is too stiff to be pliable, while below 50 MPa it is too soft to achieve a good wall thickness distribution in the cavities formed during the thermoforming process.

The film of the present invention preferably has a water vapor transmission rate (WVTR), as determined on 300 $\mu$m cast film that was annealed as described hereinbelow in accordance with ISO 15106-3:2003, of from 0.1 to 0.8 $g/m^2$day, more preferably from 0.2 to 0.7 $g/m^2$day, and most preferably from 0.3 to 0.6 $g/m^2$day.

*Process for film*

The film according to the present invention may be produced via cast film process, where the molten polymer is passed through a flat die and the film is extruded, followed by a cooling step. Cooling step plays an important role on the crystal morphology of the film obtained through such process. The inventors have found that the temperature at which the cooling is conducted has a particular importance for the final crystal morphology of the film.

The present invention further relates to a process for obtaining a film as described herein, comprising the steps of:

a) passing the propylene homopolymer as described herein through a flat die whereby the film is extruded;

b) cooling the film through a roll, wherein the cooling temperature preferably ranges from 65 to 140 °C, more preferably from 70 to 125 °C and most preferably from 80 to 120 °C.

It was found that below 65 °C, no β-phase crystals can be obtained for the films according to the present invention. Above 140 °C, on the other hand, an efficient cooling process cannot be carried out and β-phase crystals cannot be formed.

The cooling step as described in b) may be conducted through any commercially available means for cast film process, such as chill roll process, rollstack cooling, or steel belt cooling. It is particularly preferred when the cooling step as described in b) is carried out as rollstack cooling.

The present invention preferably relates to a film as described herein obtainable by the process comprising the steps of:

a) passing the propylene homopolymer as described herein through a flat die whereby the film is extruded;

b) cooling the film through a roll, wherein the cooling temperature preferably ranges from 65 to 140 °C, more preferably from 70 to 125 °C and most preferably from 80 to 120 °C.

**MEASUREMENT METHODS**

The properties of the polymers made in accordance with the present invention have been characterized according to the methods described herein, unless otherwise stated.

*Melt Flow Rate*

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg.

Calculation of melt flow rate $MFR_2$ (230 °C) of the polymer fraction produced in the second polymerization reactor is carried out using the formula below:

$$MFR\,(B) = 10^{\left[\frac{\log(MFR(C)) - w(A)\,x\,\log(MFR(A))}{w(B)}\right]} \quad (1)$$

wherein

w(A) is the weight fraction in [wt.-%] and MFR(A) is melt flow rate $MFR_2$ (230 °C) in [g/10 min] of the first polymer fraction (A) obtained in the first polymerization reactor,

w(B) is the weight fraction in [wt.-%] and MFR(B) is melt flow rate $MFR_2$ (230 °C) in [g/10 min] of second polymer fraction (B) obtained in the second polymerization reactor,

MFR(C) is melt flow rate $MFR_2$ (230 °C) in [g/10 min] of the polymer obtained as a result of the second polymerization step (the final polymer, which comprises both fractions (A) and (B)).

*Xylene Cold Soluble (XCS) Content*

The amount of the polymer soluble in xylene was determined at 25 °C according to ISO 16152; 5th edition; 2005-07-01.

### *Ethylene (C2) Content*

Quantitative nuclear-magnetic resonance (NMR) spectroscopy was used to quantify the comonomer content and comonomer distribution of the copolymers, specifically propene-co-ethylene copolymers. Quantitative $^{13}C\{^1H\}$ NMR spectra recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm selective excitation probe head at 125 °C using nitrogen gas for all pneumatics. Approximately 200 mg of material was dissolved in 1,2-tetrachloroethane-$d_2$ (TCE-$d_2$) with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). This setup was chosen primarily for the high resolution and quantitative spectra needed for accurate ethylene content determination. Standard single-pulse excitation was employed without NOE, using an optimized tip angle, 1 s recycle delay and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to regio irregular propene insertion were observed (Resconi, L., Cavallo, L., Fait, A., Piemontesi, F., Chem. Rev. 2000, 100, 1253).].

Characteristic signals corresponding to the incorporation of ethylene were observed (Cheng, H. N., Macromolecules 17, 1984, 1950). The comonomer content was calculated as the mole fraction or percent of incorporated ethylene with respect to all monomer in the copolymer using the method of Wang et. al. (Wang, W-J., Zhu, S., Macromolecules 33, 2000, 1157) through integration of multiple signals spanning the whole spectral $^{13}C$ spectra. This analyze method was chosen for its robust nature and ability to account for the presence of regio-irregular propene insertion when needed. Integral regions were slightly adjusted to increase applicability across the whole range of encountered comonomer contents.

For systems where only isolated ethylene incorporation (PPEPP) was observed the method of Wang et. al. was modified to reduce the influence of non-zero integrals used to quantify higher order comonomer sequences. In such cases the term for the absolute ethylene content was determined based upon only

$$E = 0.5( S\beta\beta + S\beta\gamma + S\beta\delta + 0.5( S\alpha\beta + S\alpha\gamma)) \qquad (2)$$

or

$$E = 0.5( I_H + I_G + 0.5( I_C + I_D )) \qquad (3)$$

using the same notation as Wang et. al. (Wang, W-J., Zhu, S., Macromolecules 33, 2000, 1157). The term used for absolute propylene content (P) was not modified and the mole fraction of ethylene calculated as

$$[E] = E / (E + P) \qquad (4)$$

The comonomer content in weight percent was calculated from the mole fraction in the usual way i.e.

$$[E \text{ wt.-}\%] = 100 * ( [E] * 28.06) / ( ([E] * 28.06) + ((1-[E]) * 42.08)) \qquad (5)$$

### *Melting Temperature Tm and Crystallization Temperature Tc*

Melting temperature Tm and crystallization temperature Tc were measured using a TA Instrument Q2000 differential scanning calorimetry (DSC) on 5 to 7 mg samples. DSC was run according to ISO 11357 / part 3 / method C2 in a heat / cool / heat cycle with a scan rate of 10 °C/min in the temperature range of -30 to +225 °C.

Crystallization temperature Tc was determined from the cooling step, while melting temperature Tm was determined from the second heating step.

*Molecular weight distribution*

Molar mass averages (Mw and Mn) and molecularweight distribution (MWD), i.e. Mw/Mn, were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)} \qquad (6)$$

$$M_w = \frac{\sum_{i=1}^{N} (A_i \; x \; M_i)}{\sum A_i} \qquad (7)$$

where Ai and Mi are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours at 160 °C under continuous gentle shaking in the autosampler of the GPC instrument.

*Crystallinity from wide angle X-ray Scattering measurement (WAXS)*

The degree of crystallinity of 300 μm cast films was studied by carrying out WAXS measurements in reflection mode with a Bruker Discover D8 diffractometer equipped with a two-dimensional GADDS detector and a Ni-filtered CuKα X-rays. Three measurements were performed on each sample and the corresponding results were averaged. The amorphous halo obtained from an atactic-PP sample [D. Tranchida, L. Resconi L., Influence of 2, 1-erythro regiodefects on the crystallization behavior of isotactic polypropylene, Polymer Crystallization 1 (2018) e10022] was properly scaled and subtracted and a crystallinity index (Xc) was quantified according to:

$$Xc = \frac{Ac}{Atot} \qquad (8)$$

where Atot is the area under the total pattern and Ac is the area after subtraction of the amorphous halo. Also, the relative content of the β-modification was calculated from the intensities of specific reflections after subtraction of the amorphous halo according to Turner-Jones et al. [A.T. Jones, J.M. Aizlewood, D. Beckett, Crystalline forms of isotactic polypropylene, Makromol. Chem.: Macromol. Chem. Phys. 75 (1964) 134-158]:

$$K_\beta = \frac{I\beta(300)}{I\alpha(110)+I\alpha(040)+I\alpha(130)+I\beta(110)} \qquad (9)$$

*Water Vapor Transmission Rate (WVTR)*

Water vapor transmission rate (WVTR) was measured on 300 μm cast films that were pressed in a compression molding machine under pressure and at a temperature of 150 °C for 10 min, to study the effect of annealing. Measurement was conducted in accordance with ISO 15106-3:2003.

Device: Mocon Aquatran
Temperature: 38 °C ± 0.3 °C.
Relative Humidity: 90% Area sample: 5 cm$^2$

*Dynamic Mechanical Thermal Analysis (DMTA)*

Thermoforming properties of 300 μm cast films were determined by dynamic mechanical thermal analysis (DMTA).

In the dynamic mechanical thermal analysis in tensile mode the sample was subjected to a constant load together with an applied sinusoidal tensile strain. Under low enough deformation material response was kept within the linear viscoelastic region which was independent of strain amplitude.

The tensile storage modulus E' (1) is determined from the following equation (Dynamic mechanical analysis : a practical introduction" Kevin P. Menard © 2008 by Taylor & Francis Group, LLC, Dynamic Testing and Instrumentation, 71-76, 2008)

$$ \mathrm{E}' = \frac{\Delta F_A}{s_A} * \frac{L_a}{bd} * \cos \delta \ [\mathrm{Pa}] \qquad (10) $$

where

$\Delta F_A$ is the measured amplitude of dynamic force, in newton

$s_A$ is the measured amplitude of the dynamic displacement, in metres

$L_a$ is the distance between the clamps, in metres

b is the width of the specimen, in metres

d is the thickness of the specimen, in metres

$\delta$ is the measured phase angle, in degrees.

The characterization of dynamic-mechanic properties complies with ISO standards 6721-1, 6721-4, 6721-11. The measurements were performed on a "Netzsch DMA 242E Artemis" strain/stress-controlled dynamic mechanical Analyzer, equipped with a tensional-sample holder for rectangular specimen geometry. Measurements were undertaken on rectangular sample cut from film sample. The rectangular sample was prepared using a laboratory cutter for clamping the specimen. The free tensile-length was about 12 mm (+-0,5mm) measured with a calliper at room temperature with an accuracy of 0,05 mm. The width and the thickness were measured using a suitable length gauge with an accuracy of 0,001 mm. The dynamic mechanic thermal analysis was performed under inert atmosphere using liquid nitrogen for cooling within the temperature range from -100 °C to +160 °C using a heating rate of 2 K/min, a frequency of 1 Hz, in strain-stress controlled mode with a maximum dynamic applied stress of 2.3 MPa, a static load of 0.020 MPa and a maximum strain amplitude of 0.20%. The clamping of the specimens was performed using a torque of 7.5 cNm on screws. The annealing at the start-temperature of -100 °C was carried out with an isothermal section of 20 minutes. The evaluation was performed using instrument software "Proteus Thermal Analysis - Version 6.1.0" to define the temperatures T'(E'=100MPa), and T"(E'=50MPa) [°C] as well as E' values [MPa] at 23, 100, 140 °C from the plot of E' versus temperature.

The thermoforming Temperature range expressed as ΔT was determined from the following equation

$$ \Delta T[°C] = T''[°C] - T'[°C] \qquad (11) $$

## EXAMPLES

### *Base Polymers*

PP-C was produced in a Borstar pilot plant with a pre-polymerization reactor, one slurry loop reactor and one gas phase reactor. PP-H was produced in a pre-polymerization reactor- slurry loop reactor - slurry loop reactor setup. Polymerization conditions are presented in Table 1.

A Ziegler-Natta catalyst whose description is provided below was used for both PP-H and PP-C. The solid catalyst was used along with triethyl-aluminium (TEAL) as cocatalyst and dicyclo pentyl dimethoxy silane (D-donor) as donor.

*1a) Catalyst preparation*

3.4 l of 2-ethylhexanol and 810 ml of propylene glycol butyl monoether (in a molar ratio of 4/1) were added to a 20 l reactor. Then 7.8 l of a 20% solution in toluene of BEM (butyl ethyl magnesium) provided by Crompton GmbH was slowly added to the well stirred alcohol mixture. During the addition the temperature was kept at 10 °C. After addition the temperature of the reaction mixture was raised to 60 °C and mixing was continued at this temperature for 30 minutes. Finally, after cooling to room temperature the obtained Mg-alkoxide was transferred to storage vessel.

21.2 g of Mg alkoxide prepared above was mixed with 4 ml bis(2-ethylhexyl) citraconate for 5 minutes. After mixing the obtained Mg complex was used immediately in the preparation of catalyst component.

19.5 ml titanium tetrachloride was placed in a 300 ml reactor equipped with a mechanical stirrer at 25 °C. Mixing speed was adjusted to 170 rpm. 26 g of Mg-complex prepared above was added within 30 minutes keeping the temperature at 25 °C. 3 ml of Viscoplex 1-254 and 24 ml of heptane were added to form an emulsion. Mixing was continued for 30 minutes at 25 °C. Then the reactor temperature was raised to 90 °C within 30 minutes. The reaction mixture was stirred for further 30 minutes at 90 °C. Afterwards stirring was stopped and the reaction mixture was allowed to settle for 15 minutes at 90 °C.

The solid material was washed with 100 ml of toluene, with of 30 ml of $TiCl_4$, with 100 ml of toluene and two times with 60 ml of heptane. 1 ml of donor was added to the two first washings. Washings were made at 80 °C under stirring 30 min with 170 rpm. After stirring was stopped the reaction mixture was allowed to settle for 20-30 minutes and followed by siphoning.

The solid material was washed 5 times: Washings were made at 80 °C under stirring 30 min with 170 rpm. After stirring was stopped the reaction mixture was allowed to settle for 20-30 minutes and followed by siphoning.

Wash 1: Washing was made with a mixture of 100 ml of toluene and 1 ml donor

Wash 2: Washing was made with a mixture of 30 ml of TiCl4 and 1 ml of donor.

Wash 3: Washing was made with 100 ml toluene.

Wash 4: Washing was made with 60 ml of heptane.

Wash 5. Washing was made with 60 ml of heptane under 10 minutes stirring.

Afterwards stirring was stopped and the reaction mixture was allowed to settle for 10 minutes decreasing the temperature to 70 °C with subsequent siphoning, and followed by $N_2$ sparging for 20 minutes to yield an air sensitive powder.

*1b) VCH modification of catalyst (only for PP-C)*

35 ml of mineral oil (Paraffinum Liquidum PL68) was added to a 125 ml stainless steel reactor followed by 0.82 g of triethyl aluminium (TEAL) and 0.33 g of dicyclopentyl dimethoxy silane (donor D) under inert conditions at room temperature. After 10 minutes 5.0 g of the catalyst prepared in 1a (Ti content 1.4 wt.-%) was added and after additionally 20 minutes 5.0 g of vinylcyclohexane (VCH) was added. The temperature was increased to 60 °C during 30 minutes and was kept there for 20 hours. Finally, the temperature was decreased to 20 °C and the concentration of unreacted VCH in the oil/catalyst mixture was analysed and was found to be 120 ppm weight.

Table 1. Polymerization conditions for PP-H and PP-C

|  |  | PP-C | PP-H |
|---|---|---|---|
| **Prepolymerization** |  |  |  |
| TEAL/Donor | mol/mol | 10 | 10 |
| TEAL/Ti | mol/mol | 200 | 200 |
| Temperature | °C | 30 | 30 |
| Residence time | min | 20 | 20 |
| **First reactor (R1)*** |  |  |  |
| Temperature | °C | 80 | 80 |
| Split | wt.-% | 60 | 60 |
| Feed H2/C3 | mol/kmol | 2.1 | 1.55 |
| Feed C2/C3 | mol/kmol | 0.8 | 0.0 |

(continued)

| First reactor (R1)* | | | |
|---|---|---|---|
| MFR$_2$ | g/10min | 3.8 | 2.8 |
| C2(R1) | wt.-% | 0.65 | 0.0 |
| Second reactor (R2)** | | | |
| Temperature | °C | 80 | 80 |
| Split | wt.-% | 40 | 40 |
| Feed H2/C3 | mol/kmol | 15.4 | 12.3 |
| Feed C2/C3 | mol/kmol | 1.5 | 0.0 |
| MFR$_2$ (R2) | g/10min | 3.8 | 2.8 |
| C2 (R2) | wt.-% | 0.65 | 0.0 |
| XCS | wt.-% | 2.2 | 3.0 |
| *loop reactor for both PP-C and PP-H* | | | |
| ** *gas phase reactor for PP-C, loop reactor for PP-H* | | | |

Both polymers PP-C and PP-H were then mixed with additives in an intensive mixer and compounds were prepared in a co-rotating twin-screw extruder. Recipe and some of the properties measured on pellets are presented in Table 2, where AO1 is Irganox 1010 (supplied by BASF AG, DE), AO2 is Irgafos 168 (supplied by BASF AG, DE) and AS is Calcium stearate (Ceasit FI supplied by Baerlocher, DE).

Table 2. Recipes and properties of compounds prepared from PP-C and PP-H

| | | PP-C | PP-H |
|---|---|---|---|
| Base polymer | wt.-% | 99.87 | 99.84 |
| AO1 | wt.-% | 0.03 | 0.04 |
| AO2 | wt.-% | 0.06 | 0.08 |
| AS | wt.-% | 0.04 | 0.04 |
| **Pellet** | | | |
| MFR$_2$ | g/10min | 3.8 | 2.8 |
| Mw/Mn | - | 5.4 | 8.1 |
| XCS | wt.-% | 2.2 | 3.0 |
| C2 (total) | wt.-% | 0.65 | 0.0 |
| Tm | °C | 161 | 163 |
| Tc | °C | 125 | 116 |
| Tm-Tc | °C | 36 | 47 |

### *Cast Films*

Cast films with 300 μm thickness were produced on a Collin calender sheet/film line with a melting temperature of 250 °C, with varying cooling temperatures that are presented in Table 3 below and throughput of 8 kg/h. Cooling step was carried out using rollstack cooling.
The line was equipped with a pilot-scale extruder of 30 mm diameter and a LID ratio of 30, running with a multi-purpose screw suitable for PP and PE processing.
The attached die had a width of 300 mm and the die gap varied in a range of 0.5 mm to 1 mm. Both calender-rolls and the following 3rd chill-roll had a width of 350 mm and a diameter of 144 mm, followed by a conventional winder. The die gap was set to 1.0 mm using draw-down to a final 300 μm thick film.
The films were then characterized to study their crystallinity using wide-angle X-ray scattering (WAXS) and temperature window for thermoforming using dynamic-mechanical-thermal analysis (DMTA), results of which are also reported in Table 3 below.

Table 3. Properties of cast films

|  |  | IE1 | CE1 | CE2 | CE3 |
|---|---|---|---|---|---|
| **Base polymer** | - | PP-H | PP-H | PP-C | PP-C |
| **Chill roll temperature** | [°C] | 110 | 40 | 40 | 110 |
| **Crystallinity** | [%] | 66 | 33 | 62 | 71 |
| **kbeta** | - | 0.38 | 0.00 | 0.00 | 0.00 |
| **Storage modulus E' (23 °C)** | [MPa] | 1947 | 1437 | 2000 | 2569 |
| **T' (at E' = 100 MPa)** | [°C] | 146.7 | 131.2 | 146.1 | 151.4 |
| **T" (at E' = 50 MPa)** | [°C] | 156.3 | 145.2 | 153.5 | 156.3 |
| **ΔT (T" - T')** | [°C] | 9.6 | 14 | 7.4 | 4.9 |

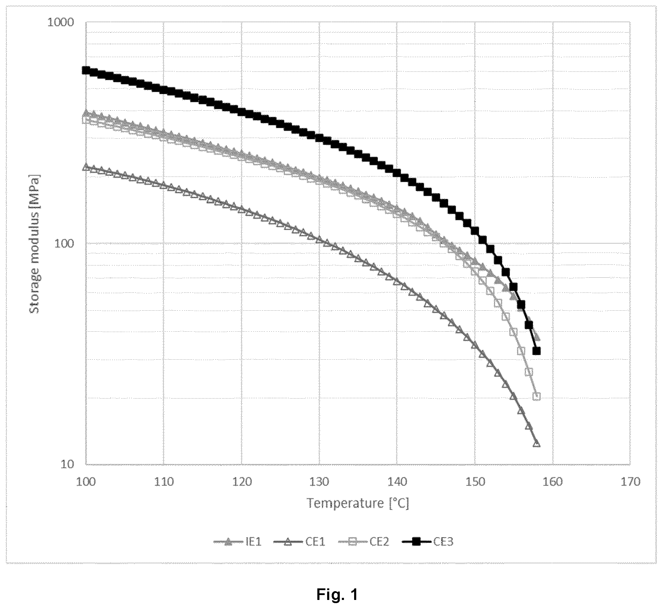

The presence of β-crystals in films of IE1 is evident from Table 3 above, while there was no β-crystals in films of CE1. Compared to CE2 and CE3, films of IE1 exhibit a broader thermoforming window and a comparable storage modulus (see Fig. 1).

During thermoforming, usually the material experiences annealing of the crystals that are not yet molten and melting and recrystallization of crystals that melt at lower temperature. β-crystals have a lower temperature of melting compared to α-crystals, and during the annealing treatment β-crystals will first melt and then recrystallize into thicker α-crystals that will melt at higher temperature. Thus, in order to study the effect of annealing, some of the produced films were placed in a compression molding machine under pressure and at a temperature of 150 °C for 10 min. The use of a compression molding machine allows to retain the flatness of the films, which is later required for testing water vapor transmission rate (WVTR). Table 4 below shows the results of crystallinity and WVTR measurements conducted on the annealed cast films.

Table 4. Properties of cast films after annealing

|  |  | IE1 | CE1 | CE3 |
|---|---|---|---|---|
| **Total crystallinity** | [%] | 75.9 | 74.1 | 77.1 |
| **kbeta** | - | 0 | 0 | 0 |
| **WVTR 38 °C 90%RH** | [g/m$^2$day] | 0.4 | 0.5 | 0.4 |

As it is evident from Table 4, films of IE1 show a better water barrier performance as lower water vapor transmission rate, in comparison with CE1, while retaining better thermoforming ability than CE3.

**Claims**

1. A film, preferably a cast film, comprising a propylene homopolymer having:

- a melt flow rate MFR$_2$, as determined in accordance with ISO1133 at 230 °C under 2.16 kg, of from 0.1 to 20 g/10 min,
- an ethylene content (C2), as determined by quantitative $^{13}$C-NMR spectroscopic analysis, of from 0 to 0.5 wt.-%;
- a melting temperature Tm, as determined in accordance with ISO 11357/part 3/method C2, of from 135 to 180 °C; and
- a xylene cold soluble (XCS) fraction, as determined in accordance with ISO 16152 at 25 °C, of from 0.1 to 10.0 wt.-%,

wherein the film has a kβ value, as determined on 300 μm cast film by wide angle X-ray Scattering measurement (WAXS) as provided in the description, of from 0.01 to 0.9.

2. The film according to claim 1, wherein the propylene homopolymer has a molecular weight distribution MWD, as determined in accordance with ISO 16014-4:2003 and ASTM D 6474-99, of from 1 to 20, preferably from 2 to 15, and most preferably from 1.5 to 10.

3. The film according to any of the preceding claims, wherein the propylene homopolymer has a melt flow rate $MFR_2$, as determined in accordance with ISO1133 at 230 °C under 2.16 kg, of from 0.5 to 10 g/10 min, preferably from 1 to 5 g/10 min.

4. The film according to any of the preceding claims, wherein the propylene homopolymer has:

   a) a xylene cold soluble (XCS) fraction, as determined in accordance with ISO 16152 at 25 °C, of from 1.0 to 8.0 wt.-%, preferably from 1.5 to 5.0 wt.-%; and/or
   b) an ethylene content (C2), as determined by quantitative $^{13}$C-NMR spectroscopic analysis, of from 0 to 0.1 wt.-%.

5. The film according to any of the preceding claims, wherein the propylene homopolymer has a melting temperature Tm, as determined in accordance with ISO 11357/part 3/method C2, of from 145 to 175 °C, preferably from 150 to 170 °C.

6. The film according to any of the preceding claims, wherein the propylene homopolymer is essentially free of β-nucleating agents, preferably essentially free of tris-2,3-dimethyl-hexylamide of trimesic acid, quinacridone quinone, N,N'-dicyclohexylterephthalamide, zinc adipate, calcium pimelate or N,N-dicyclohexyl-2,6-naphthalene dicarboxamide.

7. The film according to any of the preceding claims, wherein the kβ value, as determined on 300 μm cast film by wide angle X-ray Scattering measurement (WAXS) as provided in the description, ranges from 0.1 to 0.8, preferably from 0.2 to 0.6, and most preferably from 0.3 to 0.5.

8. The film according to any of the preceding claims, having a crystallinity, as determined on 300 μm cast film by wide angle X-ray Scattering measurement (WAXS) as provided in the description, of from 40 to 100%, preferably from 45 to 80%, and most preferably from 50 to 70%.

9. The film according to any of the preceding claims, having a storage modulus E', as determined on 300 μm cast film by DMTA analysis as described in the description, of from 1500 to 2500 MPa, preferably from 1600 to 2300 MPa, and most preferably from 1700 to 2100 MPa.

10. The film according to any of the preceding claims, having a thermoforming window ΔT, as determined on 300 μm cast film by DMTA analysis as described in the description, of from 1 to 25 °C, preferably from 3 to 20 °C, and most preferably from 5 to 15 °C.

11. The film according to any of the preceding claims, having a water vapor transmission rate (WVTR), as determined on 300 μm cast film that was annealed as described in the description in accordance with ISO 15106-3:2003, of from 0.1 to 0.8 g/m$^2$day, preferably from 0.2 to 0.7 g/m$^2$day, and most preferably from 0.3 to 0.6 g/m$^2$day.

12. The film according to any of the preceding claims, having the thickness of from 100 to 1000 μm, preferably from 150 to 800 μm, and most preferably from 200 to 600 μm.

13. The film according to any of the preceding claims, wherein the propylene homopolymer is present in an amount of from 70 to 100 wt.-%, preferably from 90 to 100 wt.-% and more preferably from 95 to 100 wt.-%, based on the total weight of the film.

14. A process for obtaining the film according to claims 1 to 13, comprising the steps of:

   a) passing the propylene homopolymer through a flat die whereby the film is extruded;
   b) cooling the film through a roll, wherein the cooling temperature preferably ranges from 65 to 140 °C, more preferably from 70 to 125 °C and most preferably from 80 to 120 °C.

15. The process according to claim 14 wherein the step b) is conducted as rollstack cooling.

**Fig. 1**

Europäisches
Patentamt

European
Patent Office

Office européen
des brevets

# EUROPEAN SEARCH REPORT

**Application Number**

EP 24 15 7998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 995 641 A1 (BOREALIS AG [AT]) 16 March 2016 (2016-03-16) * title,abstract; paragraphs [0001], [0097], [0065], [0102]; claims; example IE1; table 1; compound constituent A * | 1-15 | INV. C08J5/18 C08F110/06 C08L23/12 |
| X | EP 3 255 071 A1 (BOREALIS AG [AT]) 13 December 2017 (2017-12-13) * title,abstract; example IE1 to IE3; tables 3,2; compound PP2a polypropylene compound * | 1-5, 7-11,13 | |
| A | EP 1 023 388 A1 (MONTELL TECHNOLOGY COMPANY BV [NL]) 2 August 2000 (2000-08-02) * title,abstract; paragraphs [0001], [0047], [0048], [0054]; claims; example 2 * | 1-15 | |

**TECHNICAL FIELDS SEARCHED (IPC)**

C08J
C08F
C08L

The present search report has been drawn up for all claims

| Place of search | Date of completion of the search | Examiner |
|---|---|---|
| Munich | 26 July 2024 | Fodor, Csaba |

EPO FORM 1503 03.82 (P04C01)

## ANNEX TO THE EUROPEAN SEARCH REPORT
## ON EUROPEAN PATENT APPLICATION NO.

EP 24 15 7998

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2024

| Patent document cited in search report | | Publication date | Patent family member(s) | | Publication date |
|---|---|---|---|---|---|
| EP 2995641 | A1 | 16-03-2016 | BR | 112017004320 A2 | 05-12-2017 |
| | | | CN | 106604962 A | 26-04-2017 |
| | | | EP | 2995641 A1 | 16-03-2016 |
| | | | ES | 2771153 T3 | 06-07-2020 |
| | | | JP | 6529578 B2 | 12-06-2019 |
| | | | JP | 2017528565 A | 28-09-2017 |
| | | | KR | 20170048550 A | 08-05-2017 |
| | | | KR | 20180103182 A | 18-09-2018 |
| | | | US | 2017240733 A1 | 24-08-2017 |
| | | | WO | 2016038092 A1 | 17-03-2016 |
| EP 3255071 | A1 | 13-12-2017 | BR | 112018072330 A2 | 12-02-2019 |
| | | | CN | 109153751 A | 04-01-2019 |
| | | | DK | 3255071 T3 | 02-04-2024 |
| | | | EP | 3255071 A1 | 13-12-2017 |
| | | | US | 2019169409 A1 | 06-06-2019 |
| | | | WO | 2017211723 A1 | 14-12-2017 |
| EP 1023388 | A1 | 02-08-2000 | AT | E275169 T1 | 15-09-2004 |
| | | | AU | 5188699 A | 14-03-2000 |
| | | | BR | 9906734 A | 15-08-2000 |
| | | | CA | 2305336 A1 | 02-03-2000 |
| | | | CN | 1275145 A | 29-11-2000 |
| | | | DE | 69919834 T2 | 29-09-2005 |
| | | | EP | 1023388 A1 | 02-08-2000 |
| | | | JP | 2002523544 A | 30-07-2002 |
| | | | KR | 20010024527 A | 26-03-2001 |
| | | | PL | 339633 A1 | 02-01-2001 |
| | | | TR | 200001039 T1 | 21-11-2000 |
| | | | US | 6037417 A | 14-03-2000 |
| | | | WO | 0011077 A1 | 02-03-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4420991 A1
- WO 2012007430 A
- EP 2610271 A
- EP 2610270 A
- EP 2610272 A

**Non-patent literature cited in the description**

- **SINGH, G** ; **KOTHARI, A.** ; **GUPTA, V**. *Polymer Testing*, 2009, vol. 28 (5), 475
- **ZHOU, Z.** ; **KUEMMERLE, R** ; **QIU, X** ; **REDWINE, D** ; **CONG, R.** ; **TAHA, A.** ; **BAUGH, D.** ; **WINNIFORD, B**. *J. Mag. Reson*, 2007, vol. 187, 225
- **BUSICO, V** ; **CARBONNIERE, P** ; **CIPULLO, R** ; **PELLECCHIA, R** ; **SEVERN, J** ; **TALARICO, G**. *Macromol. Rapid Commun.*, 2007, vol. 28, 11289
- **RESCONI, L** ; **CAVALLO, L** ; **FAIT, A.** ; **PIEMONTESI, F**. *Chem. Rev.*, 2000, vol. 100, 1253
- **CHENG, H. N.** *Macromolecules*, 1950, vol. 17, 1984
- **WANG, W-J.** ; **ZHU, S**. *Macromolecules*, 2000, vol. 33, 1157
- **WANG, W-J** ; **ZHU, S**. *Macromolecules*, 2000, vol. 33, 1157
- **A.T. JONES** ; **J.M. AIZLEWOOD** ; **D. BECKETT**. Crystalline forms of isotactic polypropylene. *Makromol. Chem.: Macromol. Chem. Phys*, 1964, vol. 75, 134-158
- Dynamic mechanical analysis : a practical introduction. Dynamic Testing and Instrumentation. Taylor & Francis Group, LLC, 2008, 71-76